# FASCICULE DE BREVET EUROPEEN

(11) **EP 2 917 547 B1**
(45) Date de publication et mention de la délivrance du brevet: **03.01.2018**
(21) Numéro de dépôt: 13803100.0
(22) Date de dépôt: 04.11.2013
(51) Int. Cl.: F02K 9/48, F02K 9/50

(54) **DISPOSITIF ET PROCEDE D'ALIMENTATION D'UN MOTEUR-FUSEE**
VERFAHREN UND VORRICHTUNG ZUM ANTREIBEN EINES RAKETENMOTORS
METHOD AND DEVICE FOR POWERING A ROCKET MOTOR

(30) Priorité: 06.11.2012 FR 1260506
(43) Date de publication de la demande: 16.09.2015
(73) Titulaire: ArianeGroup SAS, 75015 Paris (FR)
(72) Inventeur: SANNINO, Jean Michel, F-27950 Saint-marcel (FR); LASSOUDIERE, François, F-27200 Vernon (FR); HAYOUN, David, H3W 2Y2 MONTREAL (CA)
(74) Mandataire: Intès, Didier Gérard André
(86) Numéro de dépôt international: PCT/FR2013/052621
(87) Numéro de publication internationale: WO 2014/072624

(56) Documents cités:
- WO-A1-2008/004744
- WO-A1-2011/007107
- US-A- 5 267 437
- US-A1- 2008 256 925

## Description

### DOMAINE DE L'INVENTION

La présente invention concerne le domaine de l'alimentation de moteurs-fusées et en particulier un dispositif d'alimentation d'une chambre propulsive en au moins un premier ergol et en au moins un deuxième ergol.

Dans la description qui suit les termes « amont » et « aval » sont définis par rapport au sens de circulation normal d'un ergol dans un circuit d'alimentation.

### ARRIERE-PLAN DE L'INVENTION

Dans les moteurs-fusées, la poussée est typiquement générée par la détente, dans une tuyère d'une chambre propulsive, de gaz de combustion chauds produits par une réaction chimique exothermique au sein de la chambre propulsive. Ainsi, pendant son fonctionnement, des hautes pressions règnent dans cette chambre propulsive. Afin de pouvoir continuer à alimenter cette chambre propulsive malgré les hautes pressions, les ergols doivent être introduits à des pressions encore plus élevées. Pour ce faire, différents moyens sont connus dans l'état de la technique.

Une des solutions connues consiste en l'utilisation de turbopompes. Une turbopompe comprend au moins une pompe entraînée par une turbine. Dans les moteurs dits à cycle « expander », la turbine est actionnée par l'un des ergols après son passage dans un échangeur de chaleur dans lequel il a été chauffé par la chaleur produite dans la chambre propulsive. Ainsi, ce transfert de chaleur peut contribuer simultanément à refroidir les parois de la chambre propulsive et à actionner la pompe de la turbopompe.

Toutefois, l'emploi des moteurs à cycle expander est restreint.

En effet, à partir d'une certaine poussée, l'énergie disponible pour alimenter la turbine est limitée par la capacité d'extraction du flux thermique dans l'échangeur de chaleur. Pour passer outre cette limitation, il faudrait alors augmenter la longueur et la masse de la chambre propulsive.

En outre, afin de maîtriser le rapport de mélange des ergols, se faisant en agissant sur le débit des turbines, d'autres organes et aménagements seraient nécessaires.

Une autre solution consiste en la pressurisation des réservoirs contenant les ergols. Toutefois cette approche restreint la pression maximale pouvant être atteinte dans la chambre propulsive, et donc l'impulsion spécifique du moteur-fusée. Un autre inconvénient de cette solution réside dans l'utilisation d'ergols denses, peu performants, afin de limiter la masse des fluides de pressurisation. En effet, des ergols peu denses conduiraient à utiliser des réservoirs de grands volumes ayant besoin de fortes masses de gaz de pressurisation, ce qui entraînerait une augmentation de la masse du moteur-fusée.

Le document WO 2011/007107 présente un exemple de système d'alimentation en ergols cryotechniques pour un moteur fusée.

Le document WO 2008/004744 présente un moteur fusée et son système d'alimentation associé.

### PRESENTATION DE L'INVENTION

Le but de la présente invention vise à remédier au moins substantiellement aux inconvénients précités.

Ce but est atteint avec un dispositif d'alimentation d'une chambre propulsive de moteur-fusée en au moins un premier ergol et en au moins un deuxième ergol comprenant au moins un premier réservoir pour contenir le premier ergol, au moins un deuxième réservoir pour contenir le deuxième ergol, au moins un premier circuit d'alimentation de la chambre propulsive relié au premier réservoir, au moins un deuxième circuit d'alimentation de la chambre propulsive relié au deuxième réservoir, grâce au fait que ledit premier circuit d'alimentation comprend au moins une turbopompe avec au moins une pompe pour pomper le premier ergol et au moins une turbine couplée mécaniquement à ladite pompe, ledit premier circuit d'alimentation reliant une sortie de la pompe avec une entrée de la turbine de la turbopompe à travers un échangeur de chaleur configuré pour chauffer le premier ergol avec une chaleur générée par la chambre propulsive pour actionner la turbine de la turbopompe, par détente du premier ergol après son chauffage, grâce au fait que ledit deuxième circuit d'alimentation est configuré pour alimenter la chambre propulsive en deuxième ergol par l'intermédiaire d'une vanne d'entrée, à partir du deuxième réservoir qui est configuré pour être pressurisé à une pression supérieure à celle régnant dans la chambre propulsive pour alimenter ladite chambre propulsive et grâce au fait que ladite vanne d'entrée du deuxième circuit d'alimentation est une vanne réglable qui permet d'ajuster le débit et donc la quantité de deuxième ergol alimentant la chambre propulsive.

On comprend que le moteur-fusée comporte une chambre propulsive, connue en soi, dans laquelle le premier et le deuxième ergol sont injectés. Ainsi les gaz chauds résultant de la combustion des deux ergols sont détendus et éjectés hors de la chambre propulsive pour assurer la poussée du moteur-fusée.

On comprend également que l'échangeur de chaleur permet à la fois le réchauffement du premier ergol pour son passage en phase gazeuse et le refroidissement de la paroi de la chambre propulsive, par le transfert thermique de la chaleur des gaz de combustion au premier ergol traversant l'échangeur de chaleur.

Ainsi, le premier ergol réchauffé en sortie de l'échangeur de chaleur se détend dans la turbine entraînant son actionnement, cela ayant pour effet d'actionner la pompe à son tour.

Un tel fonctionnement du premier circuit d'alimentation est du type dit à cycle « expander ».

On comprend en outre que le deuxième ergol qui alimente la chambre propulsive est pressurisé dans le deuxième réservoir à une pression supérieure à celle régnant dans la chambre propulsive et que le débit et la quantité de deuxième ergol qui alimente la chambre propulsive sont ajustés du fait de la régulation opérée par la vanne d'entrée réglable.

Grâce à ces dispositions, on simplifie la structure du deuxième circuit d'alimentation de la chambre propulsive en deuxième ergol par rapport au cas où une turbopompe serait utilisée. La puissance extraite par détente du premier ergol en aval de l'échangeur de chaleur peut totalement servir au pompage de ce seul premier ergol. En outre, ces dispositions permettent une bonne maîtrise du rapport de mélange des deux ergols grâce à la vanne d'entrée du deuxième circuit d'alimentation qui permet de réguler le débit et donc la quantité en deuxième ergol pressurisé à injecter dans la chambre propulsive. La vanne d'entrée réglable permet une bonne maîtrise du rapport de mélange des ergols dans l'alimentation de la chambre propulsive.

De plus, grâce à ces dispositions le deuxième réservoir pressurisé contenant le deuxième ergol peut être disposé tout autour de la chambre propulsive et plus nécessairement au-dessus de celle-ci comme dans le cas où une turbopompe est utilisée pour la pressurisation d'un ergol. Ceci est permis par le fait que le deuxième ergol n'est pas alimenté par une pompe, pompe qui pourrait poser un risque de cavitation sans un dimensionnement et un positionnement appropriés. Cela contribue donc à réduire l'encombrement général du dispositif d'alimentation. De manière avantageuse, le deuxième réservoir peut être notamment disposé sur le côté de la chambre propulsive, ce qui permet d'obtenir une structure plus compacte de l'ensemble moteur-fusée et réservoirs.

De surcroît, cette solution conserve la bonne performance du moteur-fusée et apporte, notamment, une bonne impulsion spécifique.

Dans certains modes de réalisation, au moins un troisième réservoir est configuré pour contenir un gaz pressurisé, ledit troisième réservoir étant connecté au deuxième réservoir par l'intermédiaire d'un détendeur.

On comprend que le gaz pressurisé du troisième réservoir pressurise le deuxième réservoir contenant le deuxième ergol. Le détendeur permet d'ajuster la pression du gaz de pressurisation entrant dans le deuxième réservoir et donc la pression du deuxième ergol contenu dans le deuxième réservoir. Selon l'invention, le premier circuit d'alimentation comprend une pompe de gavage couplée à une turbine actionnable par la détente d'un gaz pressurisé, ladite pompe de gavage étant située en aval du premier réservoir et en amont de la pompe de la turbopompe.

On comprend que la pompe de gavage assure le gavage de la turbopompe. Le gavage permet de maintenir une pression d'entrée minimale du premier ergol dans la pompe de la turbopompe et d'éviter des phénomènes de cavitation, en particulier en fin de vidange du premier réservoir, ce qui empêcherait l'utilisation du premier ergol contenu dans le premier réservoir.

Dans certains modes de réalisation, ladite turbine couplée à la pompe de gavage est située en aval du troisième réservoir et en amont du deuxième réservoir du deuxième ergol.

On comprend que la turbine de la pompe de gavage est actionnée par le gaz pressurisé contenu dans le troisième réservoir. Ce gaz est ensuite injecté dans le deuxième réservoir afin de le pressuriser.

Dans certains modes de réalisation, l'entrée du premier ergol dans la pompe de la turbopompe se fait dans la direction de propulsion de la chambre propulsive.

Grâce à cette disposition, on optimise le positionnement des circuits haute pression. En effet, la sortie de la pompe de la turbopompe et la sortie de l'échangeur sont respectivement rapprochées de l'entrée de l'échangeur de chaleur et de l'entrée de la turbine de la turbopompe. Cette disposition est permise par la mise en place de la pompe de gavage précitée qui évite les phénomènes de cavitation en entrée de la pompe de la turbopompe, pompe qui dans cette configuration se retrouve « tête en bas », et pourrait nécessiter une ligne coudée entre la pompe de gavage et l'entrée de la pompe principale.

Dans certains modes de réalisation, le deuxième réservoir est métallique.

Dans certains modes de réalisation, le deuxième réservoir est en matériau composite renforcé.

Afin de contenir la pression du deuxième réservoir et d'éviter sa déformation, la structure en matériau composite est renforcée, par bobinage par exemple.

Par ailleurs, le deuxième réservoir en matériau composite renforcé permet d'atteindre une pression du deuxième ergol en entrée de chambre plus importante qu'avec un réservoir métallique, et de ce fait d'atteindre une pression de chambre plus importante.

Dans certains modes de réalisation, les ergols peuvent être cryogéniques. En particulier, le premier ergol est de l'hydrogène liquide et le deuxième ergol est de l'oxygène liquide.

Grâce à ces dispositions, du fait de la masse volumique élevée de l'oxygène liquide par rapport à celle de l'hydrogène liquide, le deuxième réservoir possède donc un volume moins important que celui de l'hydrogène et par conséquent, on limite la masse du gaz de pressurisation et donc le volume du troisième réservoir de pressurisation du deuxième réservoir par rapport au cas où l'hydrogène liquide aurait été placé dans le deuxième réservoir.

Dans certains modes de réalisation, le gaz pressurisé est de l'hélium.

Ce gaz présente l'avantage d'être quasiment inerte. En outre, lorsque ce gaz est injecté dans le deuxième réservoir, il reste à l'état gazeux et ne se condense pas, et ce, même lorsque le deuxième ergol est cryogénique.

Dans certains modes de réalisation, le premier circuit d'alimentation comprend une vanne d'alimentation située en aval de la pompe de la turbopompe et en amont de l'échangeur.

Dans certains modes de réalisation, le premier circuit comprend une vanne de contournement située en aval de l'échangeur et en amont de l'entrée de la chambre propulsive.

Dans certains modes de réalisation, la vanne de contournement est réglable.

On comprend que lorsque la vanne de contournement est ouverte, une partie du premier ergol sortant de l'échangeur de chaleur traverse cette vanne et est directement injectée dans la chambre propulsive sans alimenter la turbine de la turbopompe. Grâce à ces dispositions, on ajuste le débit et donc la quantité en premier ergol alimentant la chambre propulsive. En effet, une quantité moindre d'ergol alimentant la turbine va ralentir son fonctionnement et de ce fait, ralentir la pompe de la turbopompe.

Dans certains modes de réalisation, le premier circuit comporte une vanne tout ou rien en aval de la pompe de la turbopompe et en amont de l'échangeur.

On comprend que la vanne tout ou rien laisse passer ou bloque le passage du premier ergol vers l'échangeur de chaleur. Ainsi, on comprend que la vanne tout ou rien complémente la vanne de contournement, la vanne de contournement réglant la quantité en premier ergol alimentant la turbine de la turbopompe et donc la chambre propulsive.

La présente invention se rapporte aussi à un procédé d'alimentation d'une chambre propulsive de moteur-fusée en un premier et un deuxième ergol, dans lequel le premier ergol est pompé à partir d'un premier réservoir vers la chambre propulsive à travers un premier circuit d'alimentation de la chambre propulsive par au moins une pompe d'une turbopompe comprenant ladite pompe et une turbine couplée mécaniquement à la pompe, le premier circuit d'alimentation reliant une sortie de la pompe à une entrée de la turbine à travers un échangeur de chaleur configuré pour chauffer le premier ergol avec une chaleur générée dans la chambre propulsive pour actionner la turbine de la turbopompe, par détente du premier ergol après son chauffage dans l'échangeur, dans lequel le deuxième ergol est pressurisé dans un deuxième réservoir à une pression interne supérieure à la pression interne de la chambre propulsive, et dans lequel le deuxième ergol est propulsé vers la chambre propulsive par la pression interne dudit deuxième réservoir à travers un deuxième circuit d'alimentation de la chambre propulsive relié au deuxième réservoir, ledit deuxième circuit comprenant une vanne d'entrée.

Plusieurs modes de réalisation sont décrits dans le présent exposé. Toutefois, sauf précision contraire, les caractéristiques décrites en relation avec un mode ou exemple quelconque peuvent être appliquées à un autre mode ou exemple de réalisation.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux figures annexées, sur lesquelles :
- la figure 1 est une vue schématique d'un moteur-fusée comprenant un dispositif d'alimentation, dans lequel l'alimentation d'une pompe d'une turbopompe en un premier ergol se fait dans une direction opposée à la direction de propulsion d'une chambre propulsive du moteur-fusée et,
- la figure 2 est une vue schématique d'un moteur-fusée comprenant un dispositif d'alimentation suivant un mode de réalisation de l'invention, dans lequel l'alimentation d'une pompe d'une turbopompe en un premier ergol se fait dans une direction de propulsion d'une chambre propulsive du moteur-fusée.

### DESCRIPTION DETAILLEE D'EXEMPLES DE REALISATION

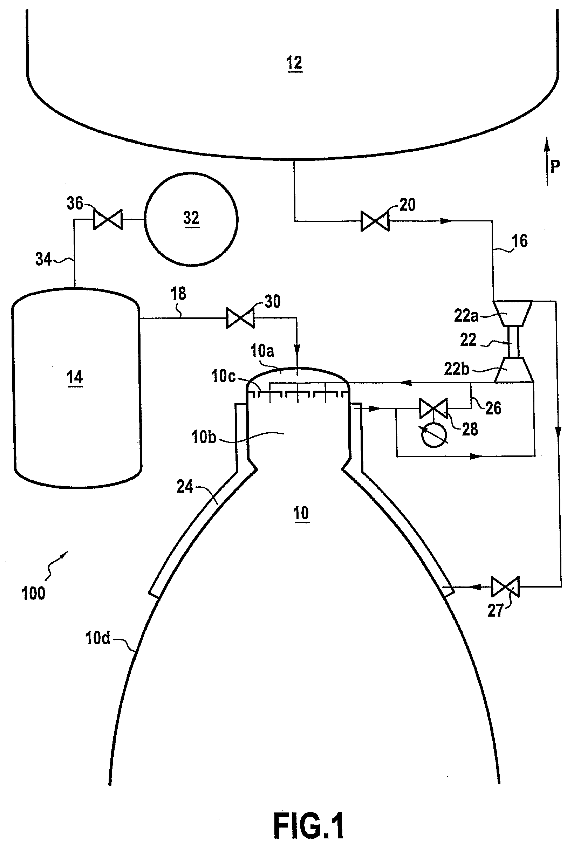

La figure 1 illustre un moteur fusée 100 comprenant une chambre propulsive 10 et un dispositif d'alimentation de cette chambre propulsive en un premier et en un deuxième ergol selon un premier mode de réalisation. La chambre propulsive 10 comprend successivement un dôme d'injection 10a du premier ergol, une chambre de combustion 10b comprenant dans sa partie supérieure un ensemble d'injecteurs 10c dans lequel pénètrent le premier et le deuxième ergol. La chambre de combustion 10b se termine par un divergent 10d pouvant être métallique ou fait d'un matériau composite, par exemple. Ainsi, après être passés dans l'ensemble d'injecteurs 10c, le premier ergol et le deuxième ergol se mélangent et entrent en combustion dans la chambre de combustion 10b, générant des gaz de combustion assurant la poussée du moteur-fusée 100.

Le dispositif d'alimentation de la chambre propulsive 10 comprend un premier réservoir 12 contenant un premier ergol, de l'hydrogène cryogénique, en phase liquide, stocké à environ -253°C, par exemple. Ce dispositif d'alimentation comprend également un deuxième réservoir 14 contenant un deuxième ergol, de l'oxygène cryogénique, en phase liquide, stocké à environ -183°C, par exemple. En outre, dans cet exemple, le premier réservoir 12 et le deuxième réservoir 14 sont cylindriques mais pourraient avoir d'autres formes.

Le dispositif d'alimentation comprend un premier circuit d'alimentation 16 de la chambre propulsive 10 en hydrogène relié au premier réservoir 12, appelé ci-après « premier circuit » ainsi qu'un deuxième circuit d'alimentation 18 de la chambre propulsive 10 en oxygène relié au deuxième réservoir 14, appelé ci-après « deuxième circuit ».

Dans ce premier mode de réalisation, le premier circuit d'alimentation 16 comprend une vanne d'alimentation 20 connue en soi, une turbopompe 22 comprenant une pompe 22a et une turbine 22b, la pompe 22a et la turbine 22b étant mécaniquement couplées. En outre, dans ce premier mode de réalisation, l'entrée de l'hydrogène liquide à partir du premier réservoir 12 dans la pompe 22a se fait dans une direction opposée à la direction P de propulsion de la chambre propulsive 10.

Le premier circuit d'alimentation 16 comprend en outre un échangeur de chaleur 24 formé dans une paroi de la chambre de combustion 10b de la chambre propulsive 10, de manière à refroidir la paroi de la chambre de combustion 10b par le transfert de chaleur des gaz chauds de combustion de l'hydrogène et de l'oxygène à l'hydrogène liquide pendant sa circulation dans l'échangeur de chaleur 24. Ce transfert de chaleur contribue également à réchauffer l'hydrogène liquide qui, en phase gazeuse, se détend dans la turbine 22b, cela ayant pour effet d'entraîner la turbine 22b de la turbopompe 22.

Ainsi, le premier circuit d'alimentation 16 en hydrogène de la chambre propulsive 10 fonctionne suivant un cycle « expander ».

Ce premier circuit d'alimentation 16 comporte également un passage de contournement 26 muni d'une vanne de contournement 28. En outre, ce premier circuit d'alimentation 16 comprend une vanne 27 d'alimentation disposée en aval de la pompe 22a de la turbopompe 22 et en amont de l'échangeur de chaleur 24. Dans cet exemple, la vanne 27 d'alimentation est une vanne tout ou rien mais pourrait être, dans une variante, une vanne de réglage permettant de régler le débit et donc la quantité en premier ergol entrant dans la chambre de combustion 10b. Ainsi, dans le cas où la vanne 27 d'alimentation est une vanne de réglage, il est possible de s'affranchir de la vanne de contournement 28.

Le deuxième circuit d'alimentation 18 de la chambre de combustion 10b en oxygène comprend une vanne d'entrée 30 réglable permettant de régler le débit et donc la quantité d'oxygène alimentant ladite chambre de combustion 10b.

Le deuxième réservoir 14 comprenant l'oxygène est pressurisé par un gaz pressurisé, de l'hélium dans cet exemple, contenu dans un troisième réservoir 32. Ce troisième réservoir 32 est connecté au deuxième réservoir 14 par un circuit de pressurisation 34 comprenant un détendeur 36. La présente invention n'est pas limitée à un seul réservoir d'oxygène mais pourrait comprendre plusieurs réservoirs d'oxygène disposés, par exemple, tout autour de la chambre propulsive 10, où chacun desdits réservoirs serait pressurisé par une réserve de gaz de pressurisation. En outre, dans une variante, le ou les réservoir(s) d'oxygène et leur réserve de gaz respective pourraient être largués au fur et à mesure de leur épuisement.

Ces dispositions conservent la bonne performance du moteur-fusée et apportent, notamment, une bonne impulsion spécifique comprise entre 455 secondes et 465 secondes en fonction de la longueur du divergent 10d.

Le deuxième réservoir 14 contenant l'oxygène peut être métallique et dans ce cas, permet d'obtenir une pression de l'oxygène en entrée de la chambre de combustion 10b de 2 MPa environ, ceci permettant d'atteindre une pression de chambre de 1,5 MPa approximativement. Par ailleurs, le deuxième réservoir 14 peut être en matériau composite renforcé par bobinage, par exemple. Ce type de réservoir permet d'atteindre des pressions de chambre plus importantes par rapport au cas où le réservoir est métallique. En effet, il permet d'obtenir une pression de l'oxygène en entrée de la chambre de combustion 10b de 5 MPa environ et d'atteindre une pression de chambre comprise entre 3 MPa et 4 MPa.

Afin d'alimenter la chambre de combustion 10b en hydrogène, ce dernier est pompé du premier réservoir 12 par la pompe 22a de la turbopompe 22. L'hydrogène pompé traverse la vanne tout ou rien 27 et circule dans l'échangeur de chaleur 24. La chaleur produite par la combustion du mélange d'hydrogène et d'oxygène dans la chambre de combustion 10b contribue à chauffer et à réchauffer l'hydrogène liquide circulant dans l'échangeur de chaleur 24. A la sortie de l'échangeur de chaleur 24, une partie de l'hydrogène réchauffé traverse la vanne de contournement 28 réglable afin d'atteindre directement la chambre de combustion 10b sans passer par la turbine 22b de la turbopompe 22. L'autre partie de l'hydrogène réchauffé alimente ladite turbine 22b et se détend dans celle-ci, ce qui a pour effet de l'actionner et donc d'actionner la pompe 22a de la turbopompe 22. Ainsi, la vanne de contournement 28 permet de réguler le débit et donc la quantité d'hydrogène à injecter dans la chambre de combustion 10b en réglant la puissance de la turbine 22b de la turbopompe 22. En effet, plus la turbine 22b reçoit une quantité importante d'hydrogène réchauffé, plus la pompe 22a de la turbopompe 22 est actionnée et plus elle pompe de l'hydrogène du premier réservoir 12.

En outre, afin d'alimenter la chambre de combustion 10b en oxygène, l'hélium sous pression est envoyé dans le deuxième réservoir 14 par l'intermédiaire du circuit de pressurisation 34. La pression de l'hélium sortant du circuit de pressurisation 34 est ajustée par le détendeur 36. Cette disposition a pour effet de pressuriser l'oxygène contenu dans le deuxième réservoir 14 à une pression supérieure à celle régnant dans la chambre de combustion 10b. Puis, la vanne d'entrée 30 réglable est ouverte et ajuste le débit et donc la quantité d'oxygène pressurisé à propulser dans la chambre de combustion 10b afin d'avoir un bon rapport de mélange de l'hydrogène et de l'oxygène.

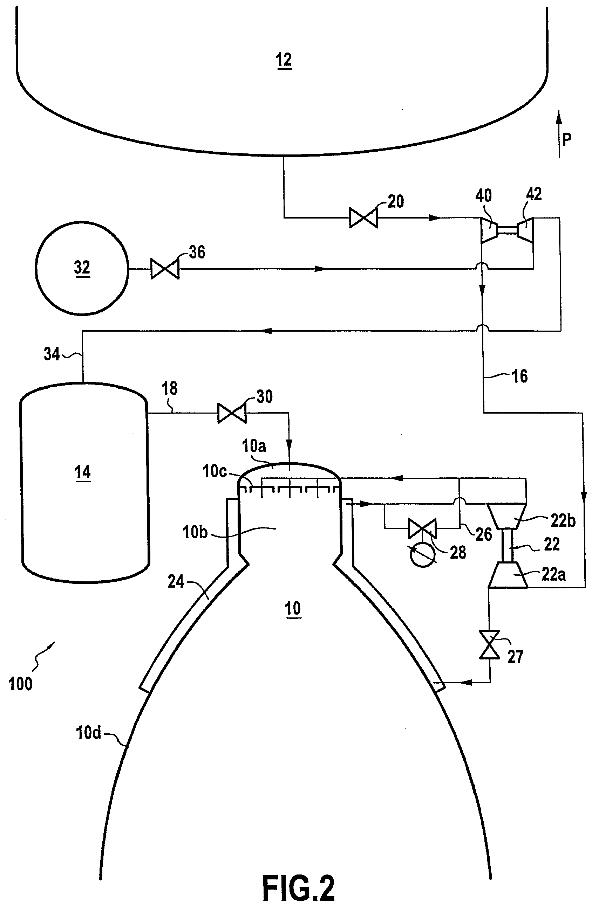

Un moteur fusée 100 avec un dispositif d'alimentation suivant un deuxième mode de réalisation est illustré sur la figure 2. La plupart des éléments de ce moteur-fusée 100 sont identiques ou équivalents à ceux décrits dans le mode de réalisation précédent et reçoivent en conséquence les mêmes références numériques.

Le deuxième mode de réalisation diffère du premier mode en ce que l'entrée de la pompe 22a de la turbopompe 22 s'effectue dans la direction P de propulsion de la chambre propulsive 10, cela facilitant son intégration mécanique. Dans ce cas, le premier circuit d'alimentation 16 comprend une pompe de gavage 40 insérée en aval de la vanne d'alimentation 20 et en amont de la pompe 22a de la turbopompe 22. Cette pompe de gavage 40 est reliée mécaniquement à une turbine 42. Cette turbine 42 est insérée dans le circuit de pressurisation 34, en aval du troisième réservoir 32 d'hélium pressurisé et du détendeur 36, et en amont du deuxième réservoir 14. La turbine 42 couplée à la pompe de gavage 40 est alors actionnée par l'hélium pressurisé, entraînant ladite pompe de gavage 40. Cette pompe de gavage 40 permet d'éviter les phénomènes de cavitation à l'entrée de la pompe 22a de la turbopompe 22 susceptibles de se produire notamment en fin de vidange du premier réservoir 12, au vu de l'orientation de la turbopompe 22 dans ce mode de réalisation.

Le fonctionnement du dispositif d'alimentation suivant ce deuxième mode de réalisation est quasiment analogue à celui du premier mode de réalisation. Il diffère du premier mode en ce qu'avant d'être envoyé dans le deuxième réservoir 14 afin de pressuriser le deuxième réservoir 14 contenant l'oxygène liquide, l'hélium contenu dans le troisième réservoir 32 alimente la turbine 42 couplée à la pompe de gavage 40, assurant l'actionnement de ladite pompe de gavage 40. Ainsi, en sortie de la vanne d'alimentation 20, l'oxygène passe dans la pompe de gavage 40, la pompe de gavage 40 assurant le gavage de la pompe de la turbopompe.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif d'alimentation d'une chambre propulsive (10) de moteur-fusée (100) en au moins un premier ergol et en au moins un deuxième ergol comprenant:
au moins un premier réservoir (12) pour contenir le premier ergol,
au moins un deuxième réservoir (14) pour contenir le deuxième ergol,
au moins un premier circuit d'alimentation (16) de la chambre propulsive (10) relié au premier réservoir,
au moins un deuxième circuit d'alimentation (18) de la chambre propulsive (10) relié au deuxième réservoir, et
dans lequel ledit premier circuit d'alimentation (16) comprend au moins une turbopompe (22) avec au moins une pompe (22a) pour pomper le premier ergol à partir du premier réservoir (12) et au moins une turbine (22b) couplée mécaniquement à ladite pompe (22a), ledit premier circuit d'alimentation (16) reliant une sortie de la pompe (22a) avec une entrée de la turbine (22b) de la turbopompe (22) à travers un échangeur de chaleur (24) configuré pour chauffer le premier ergol avec une chaleur générée par la chambre propulsive (10) pour actionner la turbine (22b) de la turbopompe (22), par détente du premier ergol après son chauffage et, en ce que ledit deuxième circuit d'alimentation (18) est configuré pour alimenter la chambre propulsive (10) par l'intermédiaire d'une vanne d'entrée (30), en deuxième ergol, à partir du deuxième réservoir (14) qui est configuré pour être pressurisé à une pression supérieure à celle régnant dans la chambre propulsive (10) pour alimenter ladite chambre propulsive, **caractérisé en ce que** ladite vanne d'entrée (30) du deuxième circuit d'alimentation (18) est une vanne réglable qui permet d'ajuster le débit et donc la quantité en deuxième ergol alimentant la chambre propulsive (10), et **en ce que** le premier circuit d'alimentation (16) comprend une pompe de gavage (40) couplée à une turbine (42) actionnable par la détente d'un gaz pressurisé, ladite pompe de gavage (40) étant située en aval du premier réservoir (12) et en amont de la pompe (22a) de la turbopompe (22).

2. Dispositif d'alimentation selon la revendication 1, dans lequel au moins un troisième réservoir (32) est configuré pour contenir un gaz pressurisé, ledit troisième réservoir (32) étant connecté au deuxième réservoir (14) par l'intermédiaire d'un détendeur (36).

3. Dispositif selon l'une des revendications 1 ou 2, dans lequel ladite turbine (42) couplée à la pompe de gavage (40) est située en aval du troisième réservoir (32) et en amont du deuxième réservoir (14) du deuxième ergol.

4. Dispositif d'alimentation selon l'une des revendications 1 à 3, dans lequel l'entrée du premier ergol dans la pompe (22a) de la turbopompe (22) se fait dans la direction de propulsion de la chambre propulsive (10).

5. Dispositif d'alimentation selon l'une quelconque des revendications 1 à 4, dans lequel le deuxième réservoir (14) est métallique.

6. Dispositif d'alimentation selon l'une quelconque des revendications 1 à 4, dans lequel le deuxième réservoir (14) est en matériau composite renforcé.

7. Dispositif d'alimentation selon l'une quelconque des revendications 1 à 6, dans lequel le premier ergol est de l'hydrogène liquide et dans lequel le deuxième ergol est de l'oxygène liquide.

8. Dispositif d'alimentation selon la revendication 2, dans lequel le gaz pressurisé contenu dans le troisième réservoir (32) est de l'hélium.

9. Dispositif selon l'une quelconque des revendications 1 à 8, dans lequel le premier circuit d'alimentation (16) comprend une vanne d'alimentation (27) située en aval de la pompe (22a) de la turbopompe (22) et en amont de l'échangeur (24).

10. Dispositif selon l'une quelconque des revendications 1 à 9, dans lequel le premier circuit d'alimentation (16) comprend une vanne de contournement (28) située en aval de l'échangeur (24) et en amont de l'entrée de la chambre propulsive (10).

11. Dispositif selon la revendication 10, dans laquelle la vanne de contournement (28) est réglable.

12. Dispositif selon la revendication 10 ou 11, dans laquelle le premier circuit d'alimentation (16) comporte une vanne tout ou rien en aval de la pompe (22a) de la turbopompe (22) et en amont de l'échangeur (24).

13. Procédé d'alimentation d'une chambre propulsive (10) de moteur-fusée (100) en un premier et un deuxième ergol, **caractérisé en ce que** :
le premier ergol est pompé à partir d'un premier réservoir (12) vers la chambre propulsive (10) à travers un premier circuit d'alimentation (16) de la chambre propulsive par au moins une pompe (22a) d'une turbopompe (22) comprenant ladite pompe (22a) et une turbine (22b) couplée mécaniquement à la pompe (22a), le premier circuit d'alimentation (16) reliant une sortie de la pompe (22b) à une entrée de la turbine (22a) à travers un échangeur de chaleur (24) configuré pour chauffer le premier ergol avec une chaleur générée dans la chambre propulsive (10) pour actionner la turbine (22b) de la turbopompe (22), par détente du premier ergol après son chauffage dans l'échangeur (24),
**en ce que** le deuxième ergol est pressurisé dans un deuxième réservoir (18) à une pression interne supérieure à la pression interne de la chambre propulsive (10), et
**en ce que** le deuxième ergol est propulsé vers la chambre propulsive (10) par la pression interne dudit deuxième réservoir (14) à travers un deuxième circuit d'alimentation (18) de la chambre propulsive (10) relié au deuxième réservoir (14), ledit deuxième circuit comprenant une vanne d'entrée (30),
**en ce que** ladite vanne d'entrée (30) du deuxième circuit d'alimentation (18) est une vanne réglable qui permet d'ajuster le débit et donc la quantité en deuxième ergol alimentant la chambre propulsive (10), et
et **en ce que** le premier circuit d'alimentation (16) comprend une pompe de gavage (40) couplée à une turbine (42) actionnable par la détente d'un gaz pressurisé, ladite pompe de gavage (40) étant située en aval du premier réservoir (12) et en amont de la pompe (22a) de la turbopompe (22).

## Patentansprüche

1. Vorrichtung zum Versorgen einer Antriebskammer (10) eines Raketenmotors (100) mit mindestens einem ersten Treibstoff und mindestens einem zweiten Treibstoff, umfassend:
mindestens einen ersten Behälter (12), der den ersten Treibstoff enthält,
mindestens einen zweiten Behälter (14), der den zweiten Treibstoff enthält,
mindestens eine erste Versorgungsschaltung (16) der Antriebskammer (10), die mit dem ersten Behälter verbunden ist,
mindestens eine zweite Versorgungsschaltung (18) der Antriebskammer (10), die mit dem zweiten Behälter verbunden ist, und
wobei die erste Versorgungsschaltung (16) mindestens eine Turbopumpe (22) mit mindestens einer Pumpe (22a), um den ersten Treibstoff vom ersten Behälter (12) zu pumpen, und mindestens eine Turbine (22b), die mechanisch mit der Pumpe (22a) gekoppelt ist, umfasst, wobei die erste Versorgungsschaltung (16) einen Ausgang der Pumpe (22a) mit einem Eingang der Turbine (22b) der Turbopumpe (22) über einen Wärmetauscher (24) verbindet, der konfiguriert ist, um den ersten Treibstoff mit einer von der Antriebskammer (10) erzeugten Wärme zu erwärmen, um die Turbine (22b) der Turbopumpe (22) durch Druckminderung des ersten Treibstoffes nach seiner Erwärmung zu betätigen, und wobei die zweite Versorgungsschaltung (18) konfiguriert ist, um die Antriebskammer (10) mit Hilfe eines Eingangsventils (30) mit einem zweiten Treibstoff von dem zweiten Behälter (14) aus zu versorgen, der konfiguriert ist, um mit einem höheren Druck als den in der Antriebskammer (10) herrschenden beaufschlagt zu werden, um die Antriebskammer zu versorgen, **dadurch gekennzeichnet, dass** das Eingangsventil (30) der zweiten Versorgungsschaltung (18) ein einstellbares Ventil ist, das es ermöglicht, die Durchflussmenge und somit die Menge an zweiten Treibstoff, mit dem die Antriebskammer (10) versorgt wird, anzupassen, und dass die erste Versorgungsschaltung (16) eine Speisepumpe (40) umfasst, die mit einer Turbine (42) gekoppelt ist, die durch die Druckminderung eines Druckgases betätigbar ist, wobei die Speisepumpe (40) stromabwärts zum ersten Behälter (12) und stromaufwärts zu der Pumpe (22a) der Turbopumpe (22) angeordnet ist.

2. Versorgungsvorrichtung gemäß Anspruch 1, bei der mindestens ein dritter Behälter (32) konfiguriert ist, um ein Druckgas zu enthalten, wobei der dritte Behälter (32) an den zweiten Behälter (14) mit Hilfe eines Druckminderers (36) angeschlossen ist.

3. Vorrichtung gemäß einem der Ansprüche 1 oder 2, bei der die an die Speisepumpe (40) gekoppelte Turbine (42) stromabwärts zu dem dritten Behälter (32) und stromaufwärts zu dem zweiten Behälter (14) des zweiten Treibstoffes angeordnet ist.

4. Versorgungsvorrichtung gemäß einem der Ansprüche 1 bis 3, bei der der Eintritt des ersten Treibstoffes in die Pumpe (22a) der Turbopumpe (22) in Antriebsrichtung der Antriebskammer (10) erfolgt.

5. Versorgungsvorrichtung gemäß einem der Ansprüche 1 bis 4, bei der der zweite Behälter (14) metallisch ist.

6. Versorgungsvorrichtung gemäß einem der Ansprüche 1 bis 4, bei der der zweite Behälter (14) aus einem verstärkten Verbundstoff besteht.

7. Versorgungsvorrichtung gemäß einem der Ansprüche 1 bis 6, bei der der erste Treibstoff flüssiger Wasserstoff ist und bei der der zweite Treibstoff flüssiger Sauerstoff ist.

8. Versorgungsvorrichtung gemäß Anspruch 2, bei der das in dem dritten Behälter (32) enthaltene Druckgas Helium ist.

9. Vorrichtung gemäß einem der Ansprüche 1 bis 8, bei der die erste Versorgungsschaltung (16) ein Versorgungsventil (27) umfasst, das sich stromabwärts der Pumpe (22a) der Turbopumpe (22) und stromaufwärts des Tauschers (24) befindet.

10. Vorrichtung gemäß einem der Ansprüche 1 bis 9, bei der die erste Versorgungsschaltung (16) ein Umlenkventil (28) umfasst, das sich stromabwärts des Tauschers (24) und stromaufwärts des Eingangs der Antriebskammer (10) befindet.

11. Vorrichtung gemäß Anspruch 10, bei der das Umlenkventil (28) einstellbar ist.

12. Vorrichtung gemäß Anspruch 10 oder 11, bei der die erste Versorgungsschaltung (16) ein Auf-Zu-Ventil stromabwärts der Pumpe (22a) der Turbopumpe (22) und stromaufwärts des Tauschers (24) umfasst.

13. Verfahren zur Versorgung einer Antriebskammer (10) eines Raketenmotors (100) mit einem ersten und einem zweiten Treibstoff, **dadurch gekennzeichnet, dass**:
der erste Treibstoff von einem ersten Behälter (12) zu der Antriebskammer (10) über eine erste Versorgungsschaltung (16) der Antriebskammer durch mindestens eine Pumpe (22a) einer Turbopumpe (22), umfassend die Pumpe (22a) und eine mechanisch an die Pumpe (22a) gekoppelte Turbine (22b), gepumpt wird, wobei die erste Versorgungsschaltung (16) einen Ausgang der Pumpe (22b) mit einem Eingang der Turbine (22a) über einen Wärmetauscher (24) verbindet, der konfiguriert ist, um den ersten Triebstoff mit der in der Antriebskammer (10) erzeugten Wärme zu erwärmen, um die Turbine (22b) der Turbopumpe (22) durch Druckminderung des ersten Treibstoffes nach seiner Erwärmung im Wärmetauscher (24) zu betätigen,
dass der zweite Treibstoff in einem zweiten Behälter (18) mit einem größeren Innendruck als der Innendruck der Antriebskammer (10) mit Druck beaufschlag wird, und
dass der zweite Treibstoff zu der Antriebskammer (10) durch den Innendruck des zweiten Behälters (14) über eine zweite Versorgungsschaltung (18) der Antriebskammer (10), die mit dem zweiten Behälter (14) verbunden ist, getrieben wird, wobei die zweite Schaltung ein Einlassventil (30) umfasst,
dass das Einlassventil (30) der zweiten Versorgungsschaltung (18) ein einstellbares Ventil ist, das es ermöglicht, die Durchflussmenge und somit die Mange an zweitem Treibstoff, mit der die Antriebskammer (10) versorgt wird, anzupassen,
und dass die erste Versorgungsschaltung (16) eine Speisepumpe (40) umfasst, die mit einer Turbine (42) gekoppelt ist, die durch die Druckminderung eines Druckgases betätigbar ist, wobei die Speisepumpe (40) stromabwärts zum ersten Behälter (12) und stromaufwärts zur Pumpe (22a) der Turbopumpe (22) angeordnet ist.

## Claims

1. A feed device for feeding a thrust chamber (10) of a rocket engine (100) with at least one first propellant and at least one second propellant, the device comprising:
• at least one first tank (12) for containing the first propellant;
• at least one second tank (14) for containing the second propellant;
• at least one first feed circuit (16) for feeding the thrust chamber (10) and connected to the first tank; and
• at least one second feed circuit (18) for feeding the thrust chamber (10) and connected to the second tank;
said feed device being **characterized in that** said first feed circuit (16) includes at least one turbopump (22) with at least one pump (22a) for pumping the first propellant from the first tank (12) and at least one turbine (22b) mechanically coupled to said pump (22a), said first feed circuit (16) connecting an outlet of the pump (22a) with an inlet of the turbine (22b) of the turbopump (22) via a heat exchanger (24) configured to heat the first propellant with heat generated by the thrust chamber (10) in order to actuate the turbine (22b) of the turbopump (22) by expansion of the first propellant after being heated, and **in that** said second feed circuit (18) is configured to feed the thrust chamber (10) via an inlet valve (30) with second propellant from the second tank (14) that is configured to be pressurized to a pressure higher than the pressure that exists in the thrust chamber (10) in order to feed the said thrust chamber, **in that** said inlet valve (30) of the second feed circuit (18) is an adjustable valve that serves to adjust the flow rate and thus the quantity of second propellant feeding the thrust chamber (10), and **in that** the first feed circuit (16) includes a booster pump (40) coupled to a turbine (42) that is suitable for being actuated by the expansion of a pressurized gas, said booster pump (40) being situated downstream from the first tank (12) and upstream from the pump (22a) of the turbopump (22).

2. A feed device according to claim 1, wherein at least one third tank (32) is configured to contain a pressurized gas, said third tank (32) being connected to the second tank (14) via an expander (36).

3. A device according to claim 1 or 2, wherein said turbine (42) coupled to the booster pump (40) is situated downstream from the third tank (32) and upstream from the second tank (14) of the second propellant.

4. A feed device according to any one of claims 1 to 3, wherein the first propellant enters the pump (22a) of the turbopump (22) in the thrust direction of the thrust chamber (10).

5. A feed device according to any one of claims 1 to 4, wherein the second tank (14) is made of metal.

6. A feed device according to any one of claims 1 to 4, wherein the second tank (14) is made of reinforced composite material.

7. A feed device according to any one of claims 1 to 6, wherein the first propellant is liquid hydrogen and wherein the second propellant is liquid oxygen.

8. A feed device according to claim 2, wherein the pressurized gas contained in the third tank (32) is helium.

9. A device according to any one of claims 1 to 8, wherein the first feed circuit (16) includes a feed valve (27) situated downstream from the pump (22a) of the turbopump (22) and upstream from the heat exchanger (24).

10. A device according to any one of claims 1 to 9, wherein the first feed circuit (16) includes a bypass valve (28) situated downstream from the heat exchanger (24) and upstream from the inlet to the thrust chamber (10).

11. A device according to claim 10, wherein the bypass valve (28) is adjustable.

12. A device according to claim 10 or claim 11, wherein the first feed circuit (16) includes an on/off valve downstream from the pump (22a) of the turbopump (22) and upstream from the heat exchanger (24).

13. A method of feeding a thrust chamber (10) of a rocket engine (100) with first and second propellants, the method being **characterized in that**:
• the first propellant is pumped from a first tank (12) to the thrust chamber (10) via a first feed circuit (16) of the thrust chamber by at least one pump (22a) of a turbopump (22) comprising said pump (22a) and a turbine (22b) that is mechanically coupled to the pump (22a), the first feed circuit (16) connecting an outlet of the pump (22b) to an inlet of the turbine (22a) via a heat exchanger (24) configured to heat the first propellant with heat generated in the thrust chamber (10) in order to actuate the turbine (22b) of the turbopump (22), by expansion of the first propellant after being heated in the heat exchanger (24);
• **in that** the second propellant is pressurized in a second tank (18) to an internal pressure higher than the internal pressure of the thrust chamber (10);
• **in that** the second propellant is propelled towards the thrust chamber (10) by the internal pressure of said second tank (14) via a second feed circuit (18) of the thrust chamber (10) connected to the second tank (14), said second circuit including an inlet valve (30); and
• **in that** said inlet valve (30) of the second feed circuit (18) is an adjustable valve that enables the flow rate and thus the quantity of second propellant feeding the thrust chamber (10) to be adjusted, and
• **in that** the first feed circuit (16) includes a booster pump (40) coupled to a turbine (42) that is suitable for being actuated by the expansion of a pressurized gas, said booster pump (40) being situated downstream from the first tank (12) and upstream from the pump (22a) of the turbopump (22).
